# EUROPEAN PATENT SPECIFICATION

(11) **EP 3 967 139 B1**
(45) Date of publication and mention of the grant of the patent: **06.05.2026**
(21) Application number: 20801790.5
(22) Date of filing: 20.01.2020
(51) Int. Cl.: A01M 1/08, A01M 1/14, A01M 1/10

(54) **INSECT TRAP**
INSEKTENFALLE
PIÈGE À INSECTES

(30) Priority: 07.05.2019 JP 2019087271
(43) Date of publication of application: 16.03.2022
(73) Proprietor: Hikari Bio Inc., Takamatsu-shi, Kagawa, 761-8042 (JP)
(72) Inventor: HIROTA, Norifumi, Takamatsu-shi, Kagawa 761-8042 (JP)
(74) Representative: Wilson Gunn
(86) International application number: PCT/JP2020/001656
(87) International publication number: WO 2020/225944

(56) References cited:
- CN-A- 102 573 454
- JP-A- 2006 115 715
- JP-A- 2007 129 944
- JP-A- 2009 195 208
- JP-A- 2014 083 005
- JP-A- 2014 083 006
- JP-A- 2018 033 449
- JP-A- H1 175 657
- JP-U- H0 728 374

## Description

### Technical Field

The present invention relates to an insect trap for exterminating pests, which is used in farms to reduce feeding damage to cultivated crops caused by pests.

### Background Art

In groves where fruits such as strawberry and peach are grown, or in farms where cultivated crops such as spinach and chrysanthemum, it is necessary to exterminate pests in order to reduce feeding damage to such crops caused by the pests.

Thus, for example, pests are attracted using an attraction light source such as a blue fluorescent light and killed by electric stimulation, or pests are sucked in using a blower and trapped.

For example, Patent Document 1 (JP 2005-229997A) discloses, as illustrated in FIG. 1 of the document, an insect trap composed of an attraction light source 2, reflective plates 4 and 5, a flying means including an electric motor 6, a fan 7, a white insect net 8, and the like, and a killing and trapping means. In such an insect trap, insects attracted by light from the light source 2 are slipped down by the reflectors 4 and 5 and are sucked in and killed by the blower unit including the motor 6 and fan 7. Finally, the insects thus killed are dropped into the trapping net 8.
Patent Document 1: JP 2005-229997A

### Disclosure of the Invention

### Problems to be Solved by the Invention

Conventional insect trap has such a problem that light from the attraction light source 2 does not reach the area below the refractive plate 5 to reduce a probability that pests at this area are attracted by the attraction light source 2 to be trapped and exterminated.

Even when the number of pests that have failed to be trapped is extremely small, some pests are very fast in growing speed and exponentially increase with time, so that a slight reduction in the extermination probability can cause a great damage to crops such as fruits and vegetables.

Further, there is a problem for tall crops that cold air tends to remain around the root thereof to cause an increase in the incidence of disease and a reduction in production rates due to difficulty in fruiting around the root. However, there have been developed no insect traps that can solve such problems.

### Means for Solving the Problems

To solve the above problems, an insect trap according to the present invention includes: an attraction light source that emits light for attracting insects; a mortar-shaped part disposed vertically below the attraction light source and having an aperture whose diameter is narrowed toward vertically downward; a cylindrical part disposed vertically below the mortar-shaped part so as to extend from the mortar-shaped part, the cylindrical part extending vertically downward from the bottom portion of the mortar-shaped part; a fan that generates an airflow in a direction sucking air from the aperture of the mortar-shaped part into the cylindrical part; a long transparent cylindrical part that is disposed vertically below the cylindrical part and transmits light; and a net disposed vertically below the long transparent cylindrical part so as to trap insects, characterized in that the long transparent cylindrical part is made of synthetic resin and is attached below the cylindrical part, the long transparent cylindrical part having openings only at its top and bottom, and having a length of 1m or more.

In the insect trap according to the present invention, an attractant for attracting insects is disposed in the vicinity of the mortar-shaped part.

In the insect trap according to the present invention, the long transparent cylindrical part is applied with an adhesive.

In the insect trap according to the present invention, a cylindrical protective net is provided so as to surround the outer circumference of the long transparent cylindrical part.

In the insect trap according to the present invention, an adhesive sheet is provided inside or outside the protective net.

In the insect trap according to the present invention, the attraction light source has an emission wavelength range of 500 nm or more and 750 nm or less and has a maximum emission peak wavelength in a wavelength range of 540 nm or more and 630 nm or less.

The insect trap according to the present invention further includes an auxiliary light source having a maximum emission peak around an emission wavelength of 565 nm.

In the insect trap according to the present invention, the attraction light source has an emission wavelength range of 300 nm or more and 500 nm or less and has a maximum emission peak wavelength in a wavelength range of 340 nm or more and 450 nm or less.

The insect trap according to the present invention further includes an auxiliary light source having a maximum emission peak wavelength in a wavelength range of 340 nm or more and 450 nm or less.

The insect trap according to the present invention further incudes an auxiliary light source having a maximum emission peak wavelength in a wavelength range of 540 nm or more and 630 nm or less.

### Advantageous Effects of the Invention

The insect trap according to the present invention has the long transparent cylindrical part that transmits light vertically below the cylindrical part. With the thus configured insect trap, light from the attraction light source reaches even the lower side area of the insect trap through the long transparent cylindrical part, so that the pests in this area are attracted to the attraction light source, trapped, and exterminated, thereby allowing further improvement in the probability of exterminating the pests, which can lead to a reduction in damage to crops such as fruits and vegetables due to pests.

Further, with the thus configured insect trap, warm air can be supplied from the long transparent cylindrical part to around the root of a crop, thus making it possible to reduce the incidence of crop disease and to allow fruiting around the root, which increases the production amount of crops. Thus, industrial applicability is very high.

### Brief Description of the Drawings

FIG. 1 is a view for schematically explaining an insect trap 100 according to a first embodiment of the present invention.
FIG. 2 is a view for explaining an insect trapping effect by the insect trap 100 according to the first embodiment of the present invention.
FIG. 3 is a view for explaining an air circulation effect by the insect trap 100 according to the first embodiment of the present invention.
FIGS. 4A and 4B are views for explaining an insect trap 100 according to a second embodiment of the present invention.
FIG. 5 is a view for explaining an insect trap 100 according to a third embodiment of the present invention.
FIG. 6 is a view for explaining an insect trap 100 according to a fourth embodiment of the present invention.
FIG. 7 is a view for schematically explaining an insect trap 100 according to a fifth embodiment of the present invention.
FIG. 8 is a view for schematically explaining an insect trap 100 according to a sixth embodiment of the present invention.

### Best Mode for Carrying Out the Invention

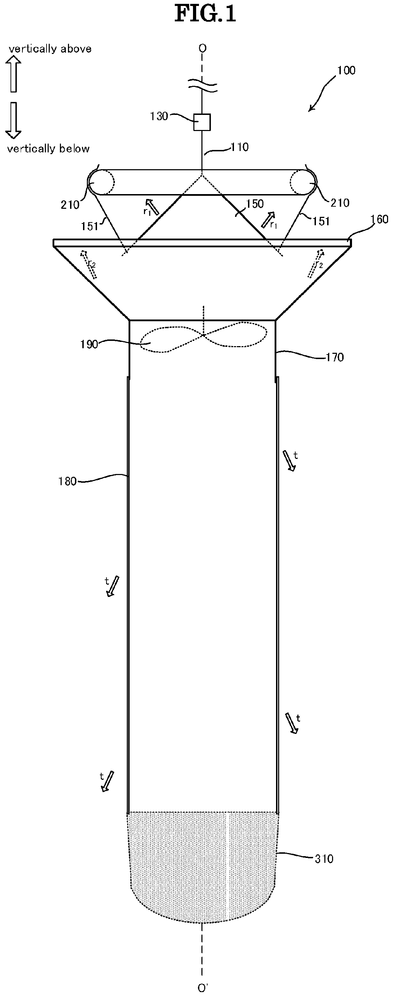

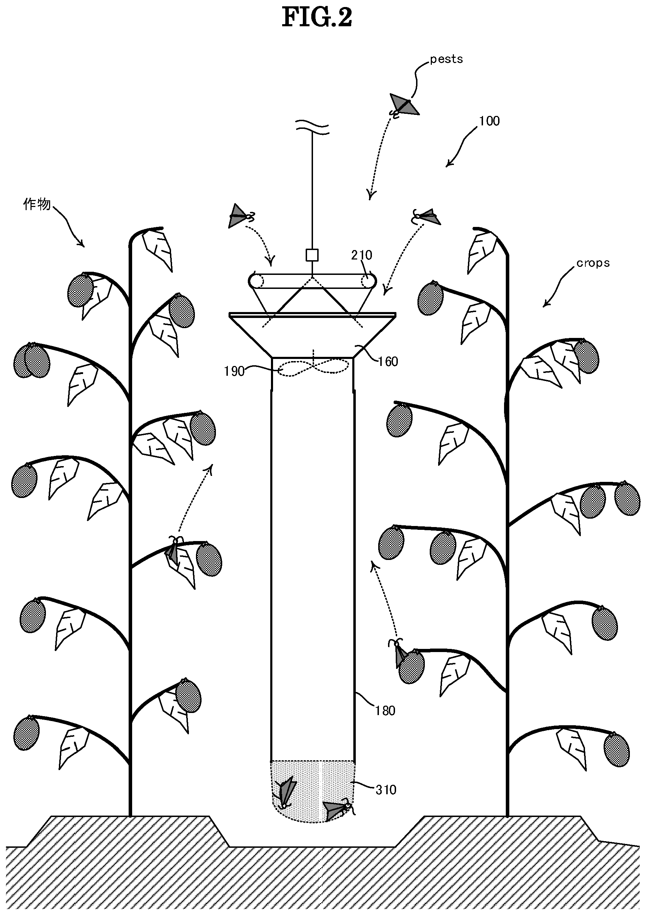

Hereinafter, embodiments of the present invention will be described with reference to the drawings. FIG. 1 is a view for schematically explaining an insect trap 100 according to a first embodiment of the present invention. FIG. 2 is a view for explaining an insect trapping effect by the insect trap 100 according to the first embodiment of the present invention.

The insect trap 100 is assumed to be hung by, e.g., a hanging wire 110 when being used. The insect trap 100 has a substantially symmetric shape with respect to a virtual axis O-O' along which the hanging wire 110 extends. For example, an attraction light source 210 has a substantially donut shape.

A conical part 150 is hung on the hanging wire 110. Above the conical part 150, a chemical mounting part 130 is attached to the hanging wire 110.

Fixing fittings 151 extend upward from three locations on the upper side of the circumferential surface of the conical part 150 to support the attraction light source 210.

The number of the fixing fittings 151 provided on the circumferential surface of the conical part 150 is not limited to three.

The attraction light source 210 is a fluorescent tube that emits light using a not-shown ballast and has a predetermined emission wavelength range. Although a fluorescent lamp is used as the attraction light source 210 in the first embodiment, the attraction light source may be an incandescent lamp, a mercury lamp, a sodium lamp, an LED, and the like. During emission, the attraction light source 210 functions as a light source for attracting pests.

Not-shown support poles extend from three locations at the bottom portion of the conical part 150 and connect conical part 150 to a mortar-shaped part 160. The space between the bottom portion of the conical part 150 and the mortar-shaped part 160, other than a portion where the support poles are, serves as a gap, allowing pests to be sucked in and light from the attraction light source 210 to travel downward therethrough. Further, a cylindrical part 170 extends vertically downward from the bottom portion of the mortar-shaped part 160.

The mortar-shaped part 160, conical part 150, and cylindrical part 170 are made of iron or stainless steel and are preferably applied with a coating film having weather resistance.

Further, a long transparent cylindrical part 180 made of synthetic resin is attached below the cylindrical part 170. The light from the attraction light source 210 entering through the gap between the mortar-shaped part 160 and the conical part 150 illuminates, as illumination light t, the lower side area of the insect trap 100 through the long transparent cylindrical part 180. Further, a trapping net 310 is attached vertically below the long transparent cylindrical part 180. Pests that have been sucked in are trapped/exterminated by the trapping net 310.

It is preferable to prepare a plurality of long transparent cylindrical parts 180 having different lengths and to select a suitable one in accordance with the growing stages of the crop.

The cylindrical part 170 has inside thereof a fan 190 driven into rotation by a not-shown motor. When the fan 190 rotates, an airflow for sucking air in the mortar-shaped part 160 vertically downward is generated at the gap between the conical part 150 and the mortar-shaped part 160.

The pests attracted to the light source 210 are guided to the trapping net 310 through the cylindrical part 170 and long transparent cylindrical part 180 by the airflow generated by the fan 190 in a direction sucking air from the opening of the mortar-shaped part 160 into the cylindrical part 170.

When the attraction light source 210 emits light, the slope of the conical part 150 positioned vertically below the attraction light source 210 functions as a reflecting surface to form reflected light r₁.

Further, when the attraction light source 210 emits light, the inner surface of the mortar-shaped part 160 positioned vertically below the attraction light source 210 functions as a reflecting surface to form reflected light r₂.

Further, when the attraction light source 210 emits light, illumination light t is emitted from the long transparent cylindrical part 180. The pests at the lower area of the mortar-shaped part 160 are also attracted to the illumination light t as attraction light, sucked in by the airflow generated by the fan 190, and finally trapped.

Thus, with the insect trap 100 according to the present invention, light from the attraction light source 210 reaches even the lower side area of the insect trap 100 through the long transparent cylindrical part 180, so that the pests in this area are attracted to the attraction light source 210, trapped, and exterminated, thereby allowing further improvement in the probability of exterminating the pests, which can lead to a reduction in damage to crops such as fruits and vegetables due to pests.

Further, the illumination light t gives crops the same effect as an increase in sunshine duration and can thus contribute to an increase in the production amount of crops.

The attraction light source 210 may have an emission wavelength range of 500 nm or more and 750 nm or less and have a maximum emission peak wavelength in a wavelength range of 540 nm or more and 630 nm or less. The thus configured attraction light source 210 can efficiently attract white flies, thrips, flies, and aphids.

The attraction light source 210 exhibiting such spectral characteristics can be constituted by forming a coating film on the surface of a fluorescent tube (white fluorescent lamp having a color temperature of 4200 K). The coating film on the surface of the fluorescent light functions as an optical filter to block emission light having a wavelength shorter than about 500 nm and to allow emission light having a wavelength longer than about 500 nm to efficiently pass therethrough. Such a coating film is formed by applying a mixture of hydroxyl group-containing acrylic resin and benzimidazolone and a mixture of epoxy resin, clear, curing agent (isocyanate compound), and thinner onto the fluorescent tube.

The attraction light source 210 applied with such a coating film particularly preferably has two local emission peaks at about 545 nm and about 575 nm in emission wavelength; alternatively, the attraction light source 210 may have two local emission peaks in the range of about 500 nm to about 650 nm in emission wavelength.

Further, the attraction light source 210 may have an emission wavelength range of 300 nm or more and 500 nm or less and have a maximum emission peak wavelength in a wavelength range of 340 nm or more and 450 nm or less. The attraction light source 210 exhibiting such spectral characteristics may be a blacklight bulb, a black fluorescent lamp, a blacklight LED, or the like. The thus configured attraction light source 210 can efficiently attract thrips, flies, noctuid moths, stink bugs, and leaf beetles.

In the present specification, "peak wavelength of 545 nm" includes a deviation of about ±15 nm. The reason why the wavelength range is defined in the range of about ±15 nm of a designated wavelength value is that even the same kind of insects have diversity in terms of regionality, which causes regional differences in the trapping effect according to the wavelength of the light source.

Although the attraction light source 210 has a substantially donut shape in the first embodiment, the shape of the light source is not limited to this in the insect trap 100 according to the present invention.

Further, although only one kind of the attraction light source 210 is used as the attraction light source in the first embodiment, two or more kinds of the attraction light sources may be used. For example, two attraction light sources having different emission wavelength ranges may be used. This increases the kinds of pests that can be attracted by the attraction light sources, thereby allowing further improvement in the probability of exterminating the pests, which can lead to a reduction in damage to crops such as fruits and vegetables due to pests.

The mesh size of the trapping net 310 is preferably in the range of about 0.1 mm to 0.3 mm. Further, trapping nets 310 having different mesh sizes may be used in the form of double layers.

For example, it is preferable to use trapping nets 310 having a mesh size of about 0.1 mm to 0. 3 mm and a mesh size of about 5 mm in the form of double layers. Even when a comparatively large-sized insect is trapped, it cannot bite and tear a coarse portion, so that trapped pests will not escape from the net, thereby allowing for further improvement in the probability of exterminating the target pests, which can lead to a reduction in damage to crops such as fruits and vegetables due to pests.

In the insect trap 100 according to the first embodiment, the chemical mounting part 130 that can be provided with a chemical substance is attached to the hanging wire 110. Preferable examples of the chemical substance provided in the chemical mounting part 130 include attractants such as sex pheromone agents, aggregation pheromone agents, and secretions of lactic acid bacteria. In this case, a synergetic effect with the pest attraction effect by the attraction light source 210 can be expected.

The chemical mounting part 130 need not necessarily be attached to the hanging wire 110 but may be provided at any location near the mortar-shaped part 160 as long as it can appropriately attract pests.

Further, as the chemical substance provided in the chemical mounting part 130, pest repellents may be used. In this case, it is possible to trap/exterminate pests that cause damage to crops with the pest attraction effect by the attraction light source 210 while repelling insects unfavorable for farms and orchards.

In the first embodiment, the insect trap 100 is hung on the hanging wire 110, and a virtual axis O-O' along which the hanging wire 110 extends is parallel to the vertical direction. However, depending on the crops such as fruits and vegetables, the insect trap 100 may be set such that the virtual axis O-O' is parallel to the horizontal direction.

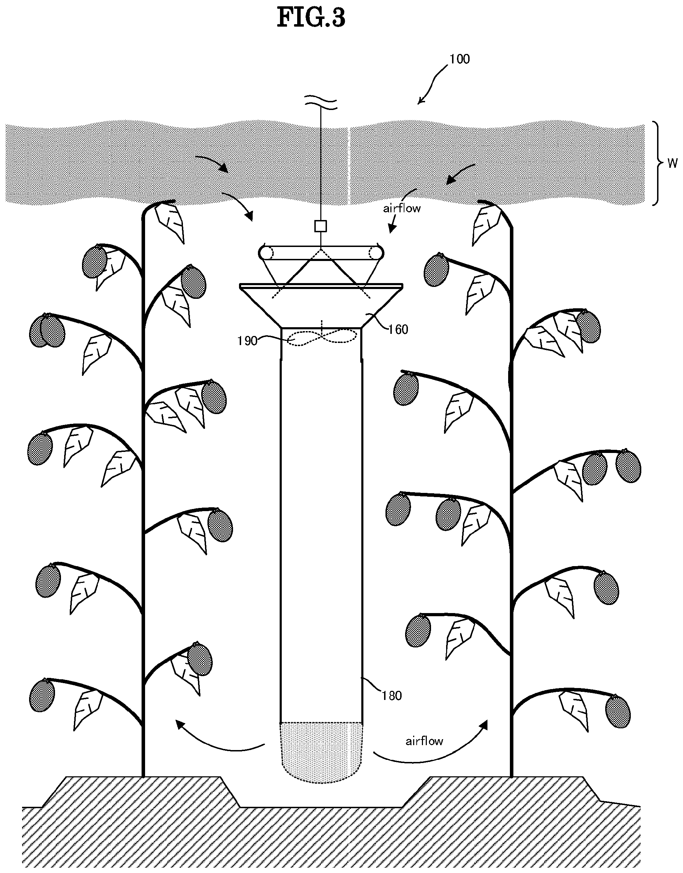

There is a problem for tall crops that cold air tends to remain around the root thereof to cause an increase in the incidence of disease and a reduction in production rates due to difficulty in fruiting around the root. The insect trap 100 according to the present invention is configured such that warm air (W) at the mortar-shaped part 160 is supplied to around the root of a crop by the fan 190. FIG. 3 is a view for explaining an air circulation effect by the insect trap 100 according to the first embodiment of the present invention.

The use of the long transparent cylindrical part 180 in the first embodiment largely contributes to the supply of the warm air (W) to the root of a tall crop as illustrated in FIG. 3. Depending on the height of crops, the long transparent cylindrical part 180 preferably has a length of 1 m or more.

With the insect trap 100 according to the present invention, warm air can be supplied from the long transparent cylindrical part 180 to around the root of a crop, thus making it possible to reduce the incidence of crop disease and to allow for fruiting around the root, which increases the production amount of crops.

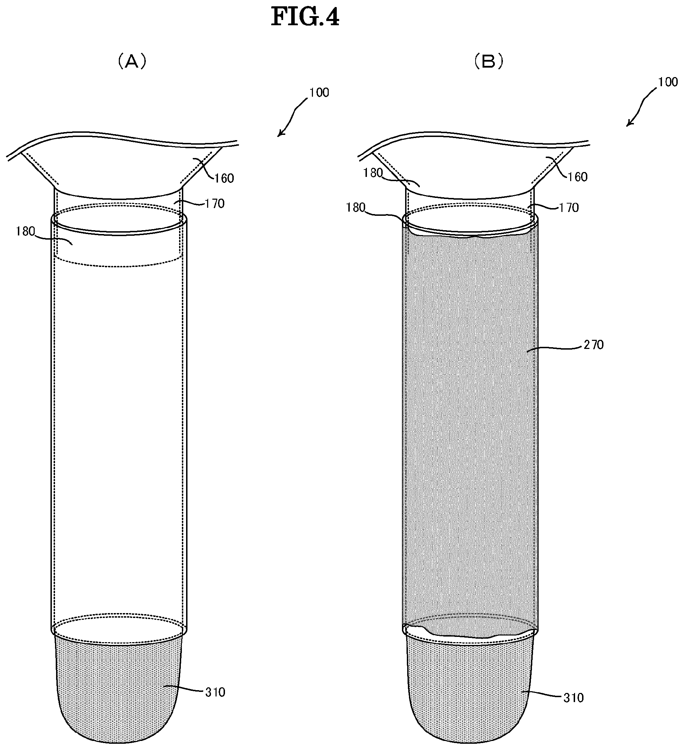

The following describes another embodiment of the present invention. FIGS. 4A and 4B are views for explaining an insect trap 100 according to a second embodiment of the present invention. FIG. 4A is a view illustrating the vicinity of the long transparent cylindrical part 180 of the insect trap 100 according to the above first embodiment, and FIG. 4B is a view illustrating the vicinity of the long transparent cylindrical part 180 of the insect trap 100 according to the second embodiment. The following description will be focused on a difference from the insect trap 100 according to the first embodiment. The features of other various embodiments to be described later can be combined with the features of any other embodiment of the insect trap 100 described in the present specification.

While there is no special contrivance made to the long transparent cylindrical part 180 itself, the long transparent cylindrical part 180 of the insect trap 100 according to the second embodiment is applied with an adhesive 270.

As described above, when the attraction light source 210 emits light, the illumination light t from the long transparent cylindrical part 180 is formed, and it is often the case that the pests attracted by the illumination light t land on the surface of the long transparent cylindrical part 180 itself. Thus, in the insect trap 100 according to the second embodiment, the adhesive 270 is applied onto the long transparent cylindrical part 180 so as to trap the pests on the long transparent cylindrical part 180 itself. Thus, according to the thus configured second embodiment, pests are trapped not only by the trapping net 310 but also by the adhesive 270, making it possible to increase the total number of pests to be trapped.

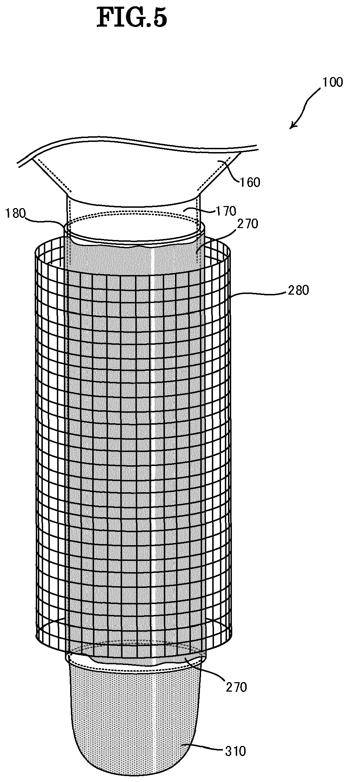

The following describes another embodiment of the present invention. FIG. 5 is a view for explaining an insect trap 100 according to a third embodiment of the present invention. In the above insect trap 100 according to the second embodiment, the adhesive 270 is applied to the outer circumferential portion of the long transparent cylindrical part 180, so that there is a risk that the leaves of a crop or farmer's hairs accidentally stick to the adhesive 270. Thus, in the third embodiment, a cylindrical protective net 280 is provided so as to surround the outer circumference of the long transparent cylindrical part 180. The protective net 280 is fixed using, e.g., an arm member (not illustrated) extending from the cylindrical part 170 or long transparent cylindrical part 180. The mesh size of the protective net 280 is preferably 5 mm to 10 cm.

According to such an embodiment, pests are trapped not only by the trapping net 310 but also by the adhesive 270, making it possible to increase the total number of pests to be trapped. In addition, it is possible to prevent the leaves of a crop or farmer's hairs from accidentally sticking to the adhesive 270.

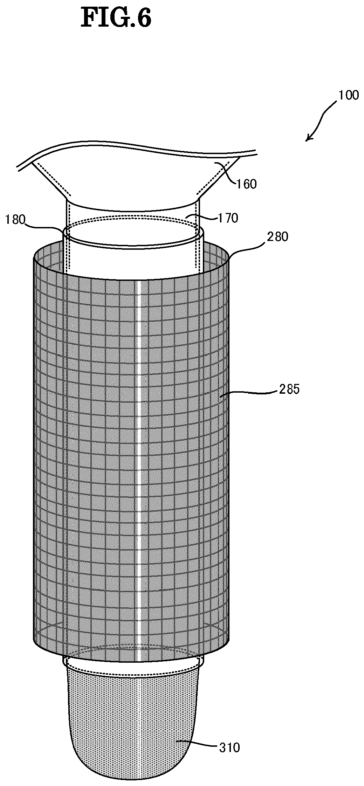

The following describes another embodiment of the present invention. FIG. 6 is a view for explaining an insect trap 100 according to a fourth embodiment of the present invention. In the second and third embodiments, the adhesive 270 is applied to the outer circumferential portion of the long transparent cylindrical part 180. On the other hand, in the insect trap 100 according to the fourth embodiment, a cylindrical protective net 280 is provided so as to surround the outer circumference of the long transparent cylindrical part 180, and an adhesive sheet 285 is wound outside the protective net 280. According to such an embodiment, the pests attracted by the illumination light t are trapped by the adhesive sheet 285, and the adhesive sheet 285 can be easily replaced with a new one.

The adhesive sheet 285 may be provided inside the protective net 280 so as to trap the pests inside the protective net 280. In this case, it is possible to reduce a probability that the leaves of a crop or farmer's hairs accidentally stick to the adhesive 270, although it becomes difficult to replace the adhesive sheet 285 with a new one.

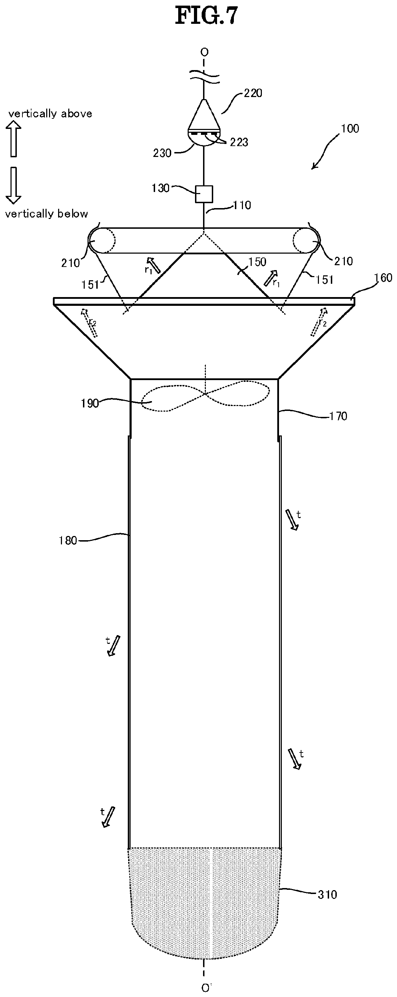

The following describes another embodiment of the present invention. FIG. 7 is a view for explaining an insect trap 100 according to a fifth embodiment of the present invention.

The insect trap 100 according to the fifth embodiment differs from that according to the first embodiment in that the light source includes, in addition to the light source 210, an auxiliary light source 220 which is mounted in the middle of the hanging wire 110. Although the chemical mounting part 130 is provided below the auxiliary light source 220 in the present embodiment, it may be provided above the auxiliary light source 220. Alternatively, the chemical mounting part 130 may be provided above and below the auxiliary light source 220.

The auxiliary light source 220 is different in type from the light source 210 used in the first embodiment. The attraction light source 210 used in the first embodiment is a fluorescent lamp applied with a predetermined coating film thereon, whereas the auxiliary light source 220 is an LED (Light Emitting Diode) device.

It is preferable to provide the auxiliary light source 220 in the middle of the hanging wire 110, for example, but not limited to this. The auxiliary light source 220 is constituted of a plurality of LED devices 223. In general, light emitted from the LED device 223 has directivity. Since the presence of directivity may hinder efficient attraction for pests, a transparent light diffusion resin 230 is provided as a means for diffusing the light emitted from the LED devices 223. The material of the light diffusion means that can be used in the present invention is limited as described in the set of claims.

When the attraction light source 210 has an emission wavelength range of 500 nm or more and 750 nm or less, the auxiliary light source 220 used in the fifth embodiment preferably has a maximum emission peak around an emission wavelength of 565 nm. In this case, white flies, thrips, aphids (winged), leaf miner flies, and flies can be attracted more efficiently by the light source including the attraction light source 210 and auxiliary light source 220.

When the attraction light source 210 has an emission wavelength range of 300 nm or more and 500 nm or less, the auxiliary light source 220 used in the fifth embodiment preferably has a maximum emission peak wavelength in a wavelength range of 340 nm or more and 450 nm or less. In this case, thrips, flies, noctuid moths, stink bugs, and leaf beetles can be attracted more efficiently by the light source including the attraction light source 210 and auxiliary light source 220.

In place of the auxiliary light source 220 having a maximum emission peak wavelength in a wavelength range of 340 nm or more and 450 nm or less, that having a maximum emission peak wavelength in a wavelength range of 540 nm or more and 630 nm or less may be used. Alternatively, the auxiliary light sources 220 having the above both maximum emission peaks may be used.

With the insect trap 100 according to the fifth embodiment described above, it is possible to expect an increase in the number of pests to be trapped by the effect of the auxiliary light source 220 as well as by the effect of the attraction light source 210 serving as a main light source.

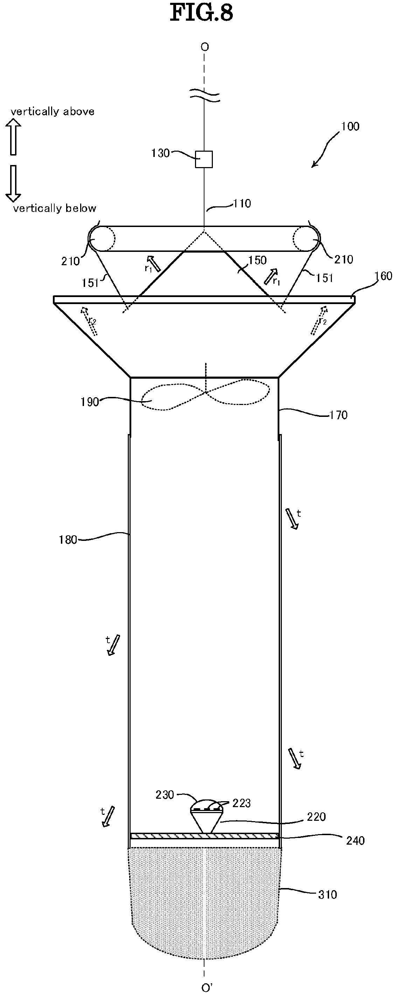

The following describes another embodiment of the present invention. FIG. 8 is a view for explaining an insect trap 100 according to a sixth embodiment of the present invention.

The auxiliary light source 220 is attached to the hanging wire 110 in the fifth embodiment, while in the sixth embodiment, the auxiliary light source 220 is supported on a support member 240 provided at the lower end side of the long transparent cylindrical part 180 so as to emit light upward in the vertical direction. The spectral characteristics of the respective attraction light source 210 and auxiliary light source 220 may be the same as those described in the fifth embodiment.

By combining the sixth embodiment in which the auxiliary light source 220 illuminates the long transparent cylindrical part 180 from below with the embodiment in which the adhesive 270 is applied to the outer circumferential portion of the long transparent cylindrical part 180 and/or the embodiment in which the adhesive sheet 285 is provided outside the protective net 280, it is possible to achieve more effective trapping of pests.

As described above, the insect trap according to the present invention has the long transparent cylindrical part that transmits light vertically below the cylindrical part. According to the thus configured insect trap, light from the attraction light source reaches even the lower side area of the insect trap 100 through the long transparent cylindrical part, so that the pests in this area are attracted to the attraction light source, trapped, and exterminated, thereby allowing further improvement in the probability of exterminating the pests, which can lead to a reduction in damage to crops such as fruits and vegetables due to pests.

Further, according to the thus configured insect trap, warm air can be supplied from the long transparent cylindrical part to around the root of a crop, thus making it possible to reduce the incidence of crop disease and to allow fruiting around the root, which increases the production amount of crops.

### Industrial Applicability

The present invention relates to an insect trap for attracting and exterminating pests, which is used in farms to reduce feeding damage to cultivated crops caused by pests. Conventional insect traps have such a problem that light from the attraction light source does not reach the lower side of the insect trap to significantly reduce a probability that pests at this area are attracted by the attraction light source to be trapped and exterminated. Further, there is a problem for tall crops that cold air tends to remain around the root thereof to cause an increase in the incidence of disease and a reduction in production rates due to difficulty in fruiting around the root. However, there have been developed no insect traps that can solve such problems.

The insect trap according to the present invention has the long transparent cylindrical part that is provided vertically below the cylindrical part, allowing light to penetrate therethrough. According to the thus configured insect trap, light from the attraction light source reaches even the lower side area of the insect trap 100 through the long transparent cylindrical part, so that the pests in this area are attracted to the attraction light source, trapped, and exterminated, thereby allowing further improvement in the probability of exterminating the pests, which can lead to a reduction in damage to crops such as fruits and vegetables due to pests. Further, according to the thus configured insect trap, warm air can be supplied from the long transparent cylindrical part to around the root of a crop, thus making it possible to reduce the incidence of crop disease and to allow fruiting around the root, which increases the production amount of crops. Thus, industrial applicability is very high.

### Reference Signs List

- 100:: Insect trap
- 110:: Hanging wire
- 130:: Chemical mounting part
- 150:: Conical part
- 151:: Fixing fitting
- 160:: Mortar-shaped part
- 170:: Cylindrical part
- 180:: Long transparent cylindrical part
- 190:: Fan
- 210:: Attraction light source
- 220:: Auxiliary light source
- 223:: LED element
- 230:: Light diffusion resin (light diffusion means)
- 240:: Support member
- 270:: Adhesive
- 280:: Protective net
- 285:: Adhesive sheet
- 310:: Trapping net

## Claims

1. An insect trap (100) comprising:
an attraction light source (210) that emits light for attracting insects;
a mortar-shaped part (160) disposed vertically below the attraction light source (210) and having an aperture whose diameter is narrowed toward vertically downward;
a cylindrical part (170) disposed vertically below the mortar-shaped part (160) so as to extend from the mortar-shaped part (160), the cylindrical part (170) extending vertically downward from the bottom portion of the mortar-shaped part (160);
a fan (190) that generates an airflow in a direction sucking air from the aperture of the mortar-shaped part (160) into the cylindrical part (170);
a long transparent cylindrical part (180) that is disposed vertically below the cylindrical part (170) and transmits light; and
a net (310) disposed vertically below the long transparent cylindrical part (180) so as to trap insects, **characterized in that**
the long transparent cylindrical part (180) is made of synthetic resin and is attached below the cylindrical part (170),
the long transparent cylindrical part (180) having openings only at its top and bottom, and having a length of 1m or more.

2. The insect trap (100) according to claim 1, **characterized in that**
an attractant for attracting insects is disposed in the vicinity of the mortar-shaped part (160).

3. The insect trap (100) according to claim 1 or 2, **characterized in that**
The long transparent cylindrical part (180) is applied with an adhesive (270).

4. The insect trap (100) according to any one of claims 1 to 3, **characterized in that**
a cylindrical protective net (280) is provided so as to surround the outer circumference of the long transparent cylindrical part (180).

5. The insect trap (100) according to claim 4, **characterized in that**
An adhesive sheet (285) is provided inside or outside the protective net (280).

6. The insect trap (100) according to any one of claims 1 to 5, **characterized in that**
the attraction light source (210) has an emission wavelength range of 500 nm or more and 750 nm or less and has a maximum emission peak wavelength in a wavelength range of 540 nm or more and 630 nm or less.

7. The insect trap (100) according to claim 6, **characterized by** further comprising an auxiliary light source (220) having a maximum emission peak around an emission wavelength of 565 nm.

8. The insect trap (100) according to any one of claims 1 to 5, **characterized in that**
the attraction light source (210) has an emission wavelength range of 300 nm or more and 500 nm or less and has a maximum emission peak wavelength in a wavelength range of 340 nm or more and 450 nm or less.

9. The insect trap (100) according to claim 8, **characterized by** further comprising an auxiliary light source (220) having a maximum emission peak wavelength in a wavelength range of 340 nm or more and 450 nm or less.

10. The insect trap (100) according to claim 8 or claim 9, **characterized by** further comprising an auxiliary light source (220) having a maximum emission peak wavelength in a wavelength range of 540 nm or more and 630 nm or less.

## Patentansprüche

1. Eine Insektenfalle (100) umfassend:
Eine Anziehungslichtquelle (210), die Licht emittiert, um Insekten anzuziehen;
ein mörserförmiges Teil (160), das vertikal unterhalb der Anziehungslichtquelle (210) angeordnet ist und eine Öffnung aufweist, deren Durchmesser nach vertikal unten hin verengt ist;
ein zylindrisches Teil (170), das vertikal unterhalb des mörserförmigen Teils (160) angeordnet ist, so dass es sich von dem mörserförmigen Teil (160) erstreckt, wobei sich das zylindrische Teil (170) vertikal nach unten von dem Bodenabschnitt des mörserförmigen Teils (160) erstreckt;
ein Ventilator (190), der einen Luftstrom in einer Richtung erzeugt, Luft von der Öffnung des mörserförmigen Teils (160) in das zylindrische Teil (170) einzusaugen;
ein langes transparentes zylindrisches Teil (180), das vertikal unterhalb des zylindrischen Teils (170) angeordnet ist und Licht überträgt;
und
ein Netz (310), das vertikal unterhalb des langen transparenten zylindrischen Teils (180) angeordnet ist, um Insekten zu fangen, **dadurch gekennzeichnet, dass** das lange transparente zylindrische Teil (180) aus synthetischem Harz hergestellt ist und unterhalb des zylindrischen Teils (170) angebracht ist, wobei das lange transparente zylindrische Teil (180) Öffnungen nur an seiner Oberseite und Unterseite aufweist und aufweisend eine Länge von 1 m oder mehr.

2. Die Insektenfalle (100) nach Anspruch 1, **dadurch gekennzeichnet, dass** ein Anziehungsmittel zum Anziehen von Insekten in der Nähe des mörserförmigen Teils (160) angeordnet ist.

3. Die Insektenfalle (100) nach Anspruch 1 oder 2, **dadurch gekennzeichnet, dass** das lange transparente zylindrische Teil (180) mit einem Klebstoff (270) versehen ist.

4. Die Insektenfalle (100) nach einem der Ansprüche 1 bis 3, **dadurch gekennzeichnet, dass**
ein zylindrisches Schutznetz (280) vorgesehen ist, um den Außenumfang des langen transparenten zylindrischen Teils (180) zu umgeben.

5. Die Insektenfalle (100) nach Anspruch 4, **dadurch gekennzeichnet, dass** Ein Klebeblatt (285) innerhalb oder außerhalb des Schutznetzes (280) vorgesehen ist.

6. Die Insektenfalle (100) nach einem der Ansprüche 1 bis 5, **dadurch gekennzeichnet, dass**
die Anziehungslichtquelle (210) einen Emissionswellenlängenbereich von 500 nm oder mehr und 750 nm oder weniger aufweist und eine maximale Emissionsspitzenwellenlänge in einem Wellenlängenbereich von 540 nm oder mehr und 630 nm oder weniger aufweist.

7. Die Insektenfalle (100) nach Anspruch 6, **dadurch gekennzeichnet, dass** sie ferner eine Hilfslichtquelle (220) umfasst, aufweisend einen maximalen Emissionspeak bei einer Emissionswellenlänge von etwa 565 nm.

8. Die Insektenfalle (100) nach einem der Ansprüche 1 bis 5, **dadurch gekennzeichnet, dass**
die Anziehungslichtquelle (210) einen Emissionswellenlängenbereich von 300 nm oder mehr und 500 nm oder weniger aufweist und eine maximale Emissionsspitzenwellenlänge in einem Wellenlängenbereich von 340 nm oder mehr und 450 nm oder weniger aufweist.

9. Die Insektenfalle (100) nach Anspruch 8, **dadurch gekennzeichnet, dass** sie ferner eine Hilfslichtquelle (220) umfasst, aufweisend eine maximale Emissionsspitzenwellenlänge in einem Wellenlängenbereich von 340 nm oder mehr und 450 nm oder weniger.

10. Die Insektenfalle (100) nach Anspruch 8 oder Anspruch 9, **dadurch gekennzeichnet, dass** sie ferner eine Hilfslichtquelle (220) umfasst, aufweisend eine maximale Emissionsspitzenwellenlänge in einem Wellenlängenbereich von 540 nm oder mehr und 630 nm oder weniger.

## Revendications

1. Piège à insectes (100) comprenant :
une source de lumière d'attraction (210) qui émet de la lumière pour attirer des insectes ;
une partie en forme de mortier (160) disposée verticalement sous la source de lumière d'attraction (210) et présentant une ouverture dont le diamètre rétrécit vers le bas verticalement ;
une partie cylindrique (170) disposée verticalement sous la partie en forme de mortier (160) de manière à s'étendre à partir de la partie en forme de mortier (160), la partie cylindrique (170) s'étendant verticalement vers le bas à partir de la partie inférieure de la partie en forme de mortier (160) ;
un ventilateur (190) qui génère un flux d'air dans une direction aspirant de l'air de l'ouverture de la partie en forme de mortier (160) vers la partie cylindrique (170) ;
une partie cylindrique transparente longue (180) qui est disposée verticalement sous la partie cylindrique (170) et transmet de la lumière ; et
un filet (310) disposé verticalement sous la partie cylindrique transparente longue (180) de manière à piéger des insectes, **caractérisé en ce que**
la partie cylindrique transparente longue (180) est fabriquée en résine synthétique et est fixée sous la partie cylindrique (170),
la partie cylindrique transparente longue (180) comporte des ouvertures uniquement en haut et en bas, et présente une longueur de 1 m ou plus.

2. Piège à insectes (100) selon la revendication 1, **caractérisé en ce que**
un appât pour appâter des insectes est disposé à proximité de la partie en forme de mortier (160).

3. Piège à insectes (100) selon la revendication 1 ou 2, **caractérisé en ce que**
un adhésif (270) est appliqué sur la partie cylindrique transparente longue (180) .

4. Piège à insectes (100) selon l'une des revendications 1 à 3, **caractérisé en ce que**
un filet de protection cylindrique (280) est prévu de manière à entourer la circonférence extérieure de la partie cylindrique transparente longue (180).

5. Piège à insectes (100) selon la revendication 4, **caractérisé en ce que**
une feuille adhésive (285) est prévue à l'intérieur ou à l'extérieur du filet de protection (280).

6. Piège à insectes (100) selon l'une des revendications 1 à 5, **caractérisé en ce que**
la source de lumière d'attraction (210) présente une plage de longueurs d'onde d'émission de 500 nm ou plus et de 750 nm ou moins et présente une longueur d'onde de pic d'émission maximale dans une plage de longueurs d'onde de 540 nm ou plus et de 630 nm ou moins.

7. Piège à insectes (100) selon la revendication 6, **caractérisé en ce qu'**il comprend en outre une source de lumière auxiliaire (220) présentant un pic d'émission maximale autour d'une longueur d'onde d'émission de 565 nm.

8. Piège à insectes (100) selon l'une des revendications 1 à 5, **caractérisé en ce que**
la source de lumière d'attraction (210) présente une plage de longueurs d'onde d'émission de 300 nm ou plus et de 500 nm ou moins et présente une longueur d'onde de pic d'émission maximale dans une plage de longueurs d'onde de 340 nm ou plus et de 450 nm ou moins.

9. Piège à insectes (100) selon la revendication 8, **caractérisé en ce qu'**il comprend en outre une source de lumière auxiliaire (220) présentant une longueur d'onde de pic d'émission maximale dans une plage de longueurs d'onde de 340 nm ou plus et de 450 nm ou moins.

10. Piège à insectes (100) selon la revendication 8 ou la revendication 9, **caractérisé en ce qu'**il comprend en outre une source de lumière auxiliaire (220) présentant une longueur d'onde de pic d'émission maximale dans une plage de longueurs d'onde de 540 nm ou plus et de 630 nm ou moins.
